# EUROPÄISCHE PATENTSCHRIFT

(11) **EP 0 596 243 B1**
(45) Veröffentlichungstag und Bekanntmachung des Hinweises auf die Patenterteilung: **10.01.1996**
(21) Anmeldenummer: 93115524.6
(22) Anmeldetag: 25.09.1993
(51) Int. Cl.: F16F 9/53

(54) **Verfahren und Schaltungsanordnung zum Dämpfen von mechanischen Schwingungen**
Method and circuit to damp mechanical vibrations
Procédé et dispositif pour amortir des vibrations mécaniques

(30) Priorität: 05.10.1992 DE 4233339
(43) Veröffentlichungstag der Anmeldung: 11.05.1994
(73) Patentinhaber: BASF Aktiengesellschaft, D-67063 Ludwigshafen (DE)
(72) Erfinder: Klett, Gerhard, Dr., D-6521 Offstein (DE); Kormann, Claudius, Dr., D-6707 Schifferstadt (DE)

(56) Entgegenhaltungen:
- EP-A- 0 385 723
- DE-A- 3 434 897
- DE-A- 3 800 678
- FR-A- 2 579 283
- Soviet Inventions illustrated, Sektion R, Woche X45, 15.April 1976, DERWENT PUBLICATIONS LTD., London, R13, Seite 4 SU-A-501 976(BIBIK et al.)

## Beschreibung

Die Erfindung betrifft ein Verfahren und eine Schaltungsanordnung zum Dämpfen von mechanischen Schwingungen gemäß oberbegriff der Ansprüche 1 und 3. Ein derartiges Verfahren und eine derartige Schaltungsanordnung sind aus der FR-A-2 579 283 bekannt.

Es sind zahlreiche Einsatzbereiche für Schwingungsdämpfer bekannt, bei denen ein rascher Dämpfungsvorgang mit automatischer Adaption an schwingungsfähige Systeme mit variierenden Systemparametern, d.h. Minimierung der Zeit bis eine Bewegung, z.B. eine periodische mechanische Schwingung, zur Ruhe kommt, von Vorteil ist. So ist es beispielsweise wichtig, daß bei einer Wägung die Waagschale in möglichst kurzer Zeit unabhängig vom aufgelegten Gewicht in ihrer Gleichgewichtslage zur Ruhe kommt, damit das Gewicht ohne Zeitverlust abgelesen werden kann. Bei der Dämpfung eines schwingenden Objektes, z.B. eines fahrenden Kraftfahrzeuges oder des Fahrersitzes in einem Kraftfahrzeug, kann es wichtig sein, daß sowohl die Schwingungsamplitude als auch die Beschleunigung gewisse Maximalwerte nicht übersteigen und daß die Schwingung in kürzest möglicher Zeit zur Ruhe kommt. Bei der Verzögerung von Bewegungsabläufen, etwa beim Abbremsen schnell bewegter Werkzeuge, kann es wichtig sein, daß die Verzögerung vorgegebene Werte nicht überschreitet, damit es nicht zu Schäden an den Werkzeugen kommt.

Bei der herkömmlichen Lösung dieser Dämpfungsprobleme werden überwiegend Flüssigkeitsdämpfer mit elektromechanisch veränderbaren Dämpfungscharakteristiken unter Einsatz von traditionellen PID-Reglern verwendet, s. K.H. Hägele, K. Engelsdorf, M. Mettner et al. 905125 XXIII. FISITA Turin (1990). Diese Veröffentlidrung zeist einen Gegenstand gemäß Oberbegriff des Anspruchs 1.

Bei Verwendung einer magnetorheologischen Flüssigkeit, im wesentlichen bestehend aus magnetisierbaren Teilchen, einer dispergierenden Substanz und einem Lösungsmittel, ist es möglich, Bewegungskräfte, welche an die Position der Flüssigkeit gekoppelt sind, durch Anlegen eines Magnetfeldes an die Flüssigkeit zu beeinflussen. Wird die Flüssigkeit beispielsweise durch einen Kolben verdrängt, so ist die Verdrängungskraft ohne angelegtes magnetisches Feld deutlich kleiner als mit Feld. Eine Kraftbeeinflussung kann auch im Sinne einer Änderung der Reibungskraft erfolgen, wenn ein Gegenstand durch die magnetorheologische Flüssigkeit ohne und mit angelegtem Magnetfeld bewegt wird.

Dementsprechend liegt vorliegender Erfindung die Aufgabe zugrunde, ein Verfahren und eine Schaltungsanordnung zum Dämpfen mechanischer Schwingungen zu entwickeln, durch die eine schnellstmögliche Dämpfung einer Schwingung bei automatischer Anpassung an das schwingende System erreichbar ist.

Gelöst wurde die Aufgabe durch ein Verfahren und eine Schaltungsanordnung gemäß Anspruch 1 und Anspruch 3.

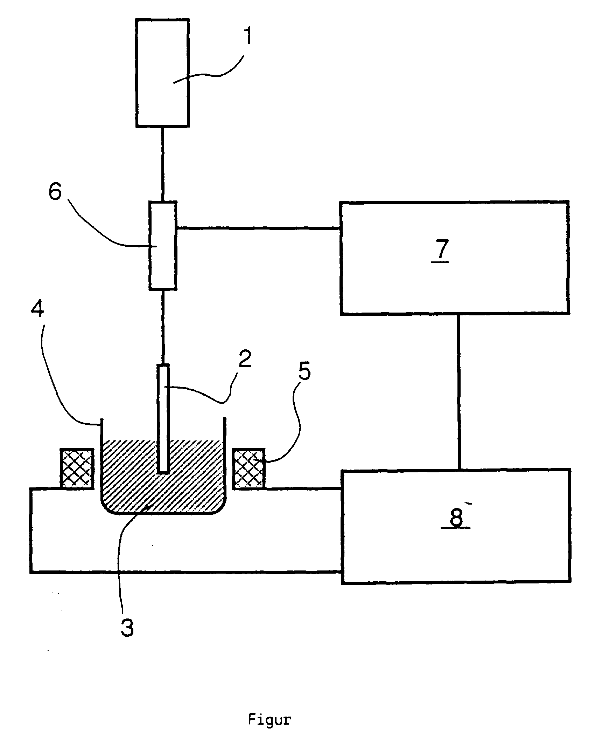

Weitere Einzelheiten und Vorteile der Erfindung sind an einem in der Zeichnung schematisch dargestellten Ausführungsbeispiel nachfolgend beschrieben.

Das schwingende System, beispielsweise das Fahrwerk eines Kraftfahrzeuges, der Sitz in einem Kraftfahrzeug oder ein Meßgerätetisch, ist in der Zeichnung mit 1 bezeichnet. Mit diesem ist ein Kolben 2 verbunden, der in eine Flüssigkeit 3 taucht. In der Flüssigkeit sind magnetisierbare Teilchen dispergiert, so daß durch Einwirkung eines Magnetfeldes die rheologischen Eigenschaften der Flüssigkeit verändert werden können. Hierzu ist der die Flüssigkeit aufnehmende zylindrische Behälter 4 von einem Elektromagneten 5 umgeben. Dessen Magnetfeld wirkt sich in der Weise aus, daß die Reibungskraft des Kolbens zum Verdrängen der Flüssigkeit größer wird, d.h. die dämpfende Wirkung der Flüssigkeit über den Kolben 2 auf das schwingende System 1 kann durch das Magnetfeld verstärkt werden. Damit ist es möglich, die Dämpfung eines schwingenden Systems optimal zu regeln, und zwar hinsichtlich minimaler Ausschwingzeiten und minimalem Überschwingen bei automatischer Anpassung an das schwingende System.

Zur Durchführung einer solchen Regelung werden mittels eines Wegsensors 6, der zwischen dem schwingenden System 1 und dem Kolben 2 eingefügt ist, die Verdrängung der Flüssigkeit 3 durch den Kolben 2 und daraus durch differentielle Ableitung nach der Zeit die Verdrängungsgeschwindigkeit bestimmt. Diese beiden Meßgrößen werden auf den IST-Wert-Eingang eines Reglers 7 gegeben. Es hat sich als vorteilhaft erwiesen, hierfür ein Rechnersystem einzusetzen, in dem ein deskriptives Modell der Regelung, basierend auf Fuzzy-Control-Methoden, in Form von Fuzzy-Regeln und entsprechenden Membership-Funktionen implementiert ist. Innerhalb des Modells werden außer den Eingangsgrößen der Verdrängungsbewegung keine weiteren Systemparameter verwendet, so daß die Regelung sich automatisch an unterschiedliche Systemparameter verschiedener schwingungsfähiger Systeme anpaßt. Der Ausgang für die Regelgröße des Rechnersystems ist mit der Ansteuerelektronik der Stromversorgung 8 für den Elektromagneten 5 verbunden, so daß innerhalb der Stellgrenzen des als Aktor dienenden magnetischen Feldes ein optimiertes Dämpfungsverhalten bewirkt wird.

## Patentansprüche

1. Verfahren zum Dämpfen von mechanischen Schwingungen, bei dem mit der Energie des schwingenden Systems ein eine in einem zylindrischen Behälter eingeschlossene Flüssigkeit verdrängenden kolben bewegt wird, die magnetisierbare Teilchen enthält und deren rheologische Eigenschaften mit Hilfe eines Magnetfeldes verändert werden, dadurch gekennzeichnet, daß diese Eigensschaften in der Weise verändert werden, daß in Abhängigkeit der Amplitude und der Geschwindigkeit des Kolbens gegenüber dem Behälter die Stärke des Magnetfeldes gesteuert wird.

2. Verfahren nach Anspruch 1, dadurch gekennzeichnet, daß die Steuerung des Magnetfeldes mit Hilfe eines Rechnersystems durchgeführt wird, welches nach Fuzzy-Control-Methode arbeitet.

3. Schaltungsanordnung zur Durchführung des Verfahrens nach Anspruch 1, bestehend aus einem mit dem schwingenden System (1) in Verbindung stehenden, in einem zylindrischen Behälter (4) befindliche Flüssigkeit (3) verdrängenden Kolben (2), wobei die Flüssigkeit magnetisierbare Teilchen enthält und der Behälter (4) von einem Elektromagneten (5) umgeben ist, dessen Stromversorgung (8) von einem Rechnersystem (7) steuerbar ist, dadurch gekennzeichnet, daß das Rechnersystem (7) mit einem IST-Wert-Eingang auf einen Wegsensor (6) des Kolbens (2) geschaltet ist, so daß in Abhängigkeit der Amplitude und Geschwindigkeit des kolbens gegenüber dem Behälter die Stärke der Magnetfeldes gesteuert wird.

## Claims

1. A method for damping mechanical oscillations, in which, using the energy of the oscillating system, a piston which displaces fluid enclosed in a cylindrical container is moved, the fluid containing magnetizable particles and its rheological properties being altered by means of a magnetic field, wherein these properties are altered in such a way that the strength of the magnetic field is controlled as a function of the amplitude and the velocity of the piston relative to the container.

2. A method as claimed in claim 1, wherein the control of the magnetic field is carried out by means of a computer system, which operates in accordance with the fuzzy control method.

3. A circuit arrangement for carrying out the method as claimed in claim 1, comprising a piston (2) which is connected to the oscillating system (1) and which displaces fluid (3) situated in a cylindrical container (4), the fluid containing magnetizable particles and the container (4) being surrounded by an electromagnet (5), the power supply (8) of which is controllable by a computer system (7), wherein the computer system (7) is connected, by an ACTUAL value input, to a path sensor (6) of the piston (2), so that the strength of the magnetic field is controlled as a function of the amplitude and velocity of the piston relative to the container.

## Revendications

1. Procédé pour l'amortissement d'oscillations mécaniques, dans lequel est mis en mouvement avec l'énergie du système oscillant un piston déplaçant un fluide, contenu dans un réservoir cylindrique, qui contient des particules magnétisables et dont les propriétés rhéologiques sont modifiées au moyen d'un champ magnétique, caractérisé en ce que ces propriétés sont modifiées de telle manière que l'intensité du champ magnétique est commandée en fonction de l'amplitude et de la vitesse du piston par rapport au réservoir.

2. Procédé selon la revendication 1, caractérisé en ce que la commande du champ magnétique est effectuée au moyen d'un système assisté par ordinateur, qui opère selon une méthode de régulation floue.

3. Dispositif de commande pour la mise en oeuvre du procédé selon la revendication 1, comprenant un piston (2) se déplaçant avec un fluide qui se trouve dans un réservoir cylindrique (4), en liaison avec le système oscillant (1), tandis que le fluide contient des particules magnétisables et que le réservoir (4) est entouré par un électro-aimant (5), dont l'alimentation en courant (8) peut être commandée par un système assisté par ordinateur (7), caractérisé en ce que le système assisté par ordinateur (7) est connecté par une entrée de valeur effective à un détecteur de trajet (6) du piston (2), de telle sorte que l'intensité du champ magnétique soit commandée en fonction de l'amplitude et de la vitesse du piston par rapport au réservoir.
